# EUROPÄISCHE PATENTSCHRIFT

(11) **EP 0 900 693 B1**
(45) Veröffentlichungstag und Bekanntmachung des Hinweises auf die Patenterteilung: **26.07.2006**
(21) Anmeldenummer: 98116442.9
(22) Anmeldetag: 31.08.1998
(51) Int. Cl.: B60Q 1/04

(54) **Befestigungsvorrichtung einer Leuchte für Fahrzeuge, insbesondere eines Scheinwerfers für Fahrzeuge**
Mounting device for vehicle headlights
Dispositif de montage pour phare de véhicule

(30) Priorität: 02.09.1997 DE 19738261
(43) Veröffentlichungstag der Anmeldung: 10.03.1999
(73) Patentinhaber: Hella KGaA Hueck & Co., 59552 Lippstadt (DE)
(72) Erfinder: Dennemark, Fridbert, 33142 Büren (DE); Seiger, Ralf, 59557 Lippstadt (DE)

(56) Entgegenhaltungen:
- DE-A- 3 726 834
- FR-A- 735 325
- US-A- 4 277 818

## Beschreibung

Die Erfindung betrifft eine Befestigungsvorrichtung einer Leuchte für Fahrzeuge, insbesondere eines Scheinwerfers für Fahrzeuge mit einem aus Kunststoff bestehenden Gehäuseteil und mit mindestens einem an dem Gehäuseteil angebrachten Halteelement, welches eine an dem Gehäuseteil angeformte erste Lasche aufweist, deren eine breite Seitenfläche eine Anlagefläche für die Fahrzeugkarosserie ist und die quer zu ihrer Anlagefläche nachgiebig ausgeführt ist, und welches ein Aufnahmeloch für einen Befestigungsbolzen aufweist, dessen Längsachse quer zur Anlagefläche verläuft und durch den das Halteelement an der Fahrzeugkarosserie festsetzbar ist.

Eine solche Befestigungsvorrichtung einer Leuchte für Fahrzeuge ist aus der DE 37 26 834 A1 bekanntgeworden. Die Leuchte weist einen aus Kunststoff bestehenden Gehäuseteil auf, welcher einen Scheinwerfer und eine seitlich neben dem Scheinwerfer angeordnete Blinkleuchte trägt. An das aus Kunststoff bestehende Gehäuseteil ist ein Halteelement angeformt, welches mit einer elastisch nachgiebigen Lasche versehen ist. Die Lasche ist zur Vorderseite der Leuchte hin gerichtet und die untere Seite der Lasche dient als Anlagefläche für die Fahrzeugkarosserie. In die elastisch nachgiebige Lasche ist ein Aufnahmeloch für einen Befestigungsbolzen eingebracht, der mit seiner Längsachse lotrecht zur Anlagefläche der Lasche verläuft. Als Befestigungsbolzen dient eine Schraube, die mit ihrem Gewindeschaft durch das Aufnahmeloch der Lasche hindurchgesteckt ist und mit ihrem Kopf an der elastisch nachgiebigen Lasche anliegt. Der Gewindeschaft des Befestigungsbolzens greift in eine Mutter der Fahrzeugkarosserie ein. Beim Eindrehen des Befestigungsbolzens in die Fahrzeugkarosserie zieht der Kopf des Befestigungsbolzens die von der Fahrzeugkarosserie beabstandete elastische Lasche zur Fahrzeugkarosserie hin, bis die Lasche an die Fahrzeugkarosserie anschlägt.

Die federnde Lasche der Leuchte gleicht grobe Toleranzen, welche zwischen Halteelementen des Gehäuseteils und Befestigungspunkten der Fahrzeugkarosserie bestehen, aus, ohne daß aufwendige Befestigungsvorrichtungen notwendig sind. Hierbei ist es nachteilig, daß die Leuchte im Fahrbetrieb wegen der vertikal elastisch nachgiebigen Lasche nicht vibrationsfrei am Fahrzeug halterbar ist.

Aus der DE 31 04 385 C2 ist ein Scheinwerfer für Fahrzeuge bekannt, bei dem an dem Gehäuseteil ein aus Federblech bestehendes, separates Halteelement festgesetzt ist. Ein aus Federblech hergestelltes Halteelement kann so steif ausgeführt sein, daß es den Scheinwerfer im Fahrbetrieb vibrationsfrei hält. Jedoch ist das Halteelement ein separates Teil.

Bei dem aus der DE 36 29 124 C1 bekannten Scheinwerfer für Fahrzeuge weisen die Halteelemente an das Gehäuse angeformte starre Laschen auf, welche über eine mehrteilige verstellbare Halteeinrichtung mit der Fahrzeugkarosserie verbindbar sind. Durch die mehrteilige Halteeinrichtung sind die zwischen dem Gehäuseteil und der Fahrzeugkarosserie bestehenden groben Toleranzen ausgleichbar und der Scheinwerfer ist gegenüber der Fahrzeugkarosserie justierbar, um zwischen der Vorderseite des Scheinwerfers und der Fahrzeugkarosserie umlaufend einen gleich breiten Spalt zu erreichen.

Aufgabe der Erfindung ist es, die im Oberbegriff des Anspruchs 1 beschriebene Befestigungsvorrichtung einer Leuchte für Fahrzeuge derart zu gestalten, daß die an dem Gehäuseteil angeformte nachgiebige Lasche des Halteelements auch bei einer Versteifung des Halteelements in einem gleichbleibend großen Weg nachgiebig ist, um einen zwischen Halteelement und Fahrzeugkarosserie bestehenden Spalt ausgleichen zu können.

Diese Aufgabe wird nach der Erfindung dadurch gelöst, daß das Halteelement eine an dem Gehäuseteil angeformte zweite Lasche aufweist, welche in Richtung der ersten Lasche nachgiebig ausgeführt ist, wobei die beiden nachgiebigen Laschen an ihren freien Endabschnitten durch ein Distanzstück verbunden sind, welches das Aufnahmeloch für den Befestigungsbolzen aufweist. Hierbei können durch das Halteelement weiterhin grobe Toleranzen ausgeglichen werden, welche zwischen dem Gehäuseteil der Leuchte und den Befestigungspunkten der Fahrzeugkarosserie bestehen. An dem Gehäuseteil können mehrere Halteelemente mit zwei nachgiebigen Laschen angebracht sein. Durch die große Verspannungskraft an den Halteelementen ist die Leuchte weitestgehend starr und stabil mit der Fahrzeugkarosserie verbunden. Das Gehäuseteil kann auch zwischen einem einzigen Halteelement mit zwei nachgiebigen Laschen und mindestens einem das Gehäuseteil starr mit der Fahrzeugkarosserie verbindenden Halteansatz verspannt sein. Durch beide Befestigungsarten ist die Leuchte vibrationsfrei an der Fahrzeugkarosserie festsetzbar.

Das Halteelement ist einfach gestaltet und kostengünstig herstellbar, wenn das Distanzstück kein separates Teil ist, sondern an die freien Endabschnitte der Laschen angeformt ist. In diesem Zusammenhang ist es zweckmäßig, wenn das Distanzstück ein Mutterteil für einen Gewindeschaft des Befestigungsbolzens ist, welcher beim Eindrehen in das Aufnahmeloch des Distanzstückes sein Muttergewinde selbst schneidet bzw. durch Eindrücken selbst formt. Damit die bei einem Formen des Gewindes entstehenden Gewindespäne im Aufnahmeloch verbleiben, ist es vorteilhaft, wenn das Aufnahmeloch ein Sackloch ist und zwischen der Grundfläche des Aufnahmeloches und dem freien Ende des Gewindebolzens ein die Gewindespäne aufnehmender Hohlraum verbleibt.

Weiterhin ist es vorteilhaft, wenn die beiden Laschen des Halteelements zungenartig und elastisch nachgiebig ausgeführt sind. Dadurch weist das Halteelement an seinem Distanzstück einen großen Federweg auf. Hierbei ist es weiterhin zweckmäßig, wenn die Laschen sich mit ihren abgewandten schmalen Seitenflächen zum Distanzstück hin verjüngen.

Das Halteelement kann im Bereich seines Distanzstückes eine große Anpreßkraft ohne bleibende Deformierung aufnehmen, wenn die Laschen mit ihrem freien Rand das an die Laschen angeformte Distanzstück überragen und durch mindestens eine Lasche das Aufnahmeloch des Halteelements hindurchführt, wobei die freien Ränder der Laschen mit an die Mantelfläche des Distanzstückes angeformten Versteifungsrippen verbunden sind. Hierbei bleibt weiterhin der Vorteil bestehen, daß nach einem Festschrauben des Halteelements an die Fahrzeugkarosserie die Längsachse des Befestigungsbolzens senkrecht zur Anlagefläche der Fahrzeugkarosserie verläuft.

Bei einer besonders vorteilhaften Weiterbildung der Erfindung verlaufen die Laschen mit ihren breiten Seitenflächen in Lichtaustrittsrichtung der Leuchte. Dadurch ist das Halteelement auch bei großer Beschleunigung oder Verzögerung des Fahrzeugs vibrationsfrei an der Fahrzeugkarosserie gehalten.

Zwei Ausführungsbeispiele nach der Erfindung sind in der Zeichnung dargestellt und zwar zeigen:
- Figur 1: in einer Vorderansicht einen Scheinwerfer für Fahrzeuge mit einem zwei nachgiebige Laschen aufweisenden Halteelement, durch welches der Scheinwerfer an der Fahrzeugkarosserie festsetzbar ist;
- Figur 2: einen Schnitt nach der Linie A-A in Figur 1 durch das Halteelement;
- Figur 3: in einer Vorderansicht ein anderes Halteelement mit zwei nachgiebigen Laschen und
- Figur 4: einen Schnitt nach der Linie B-B in Figur 3.

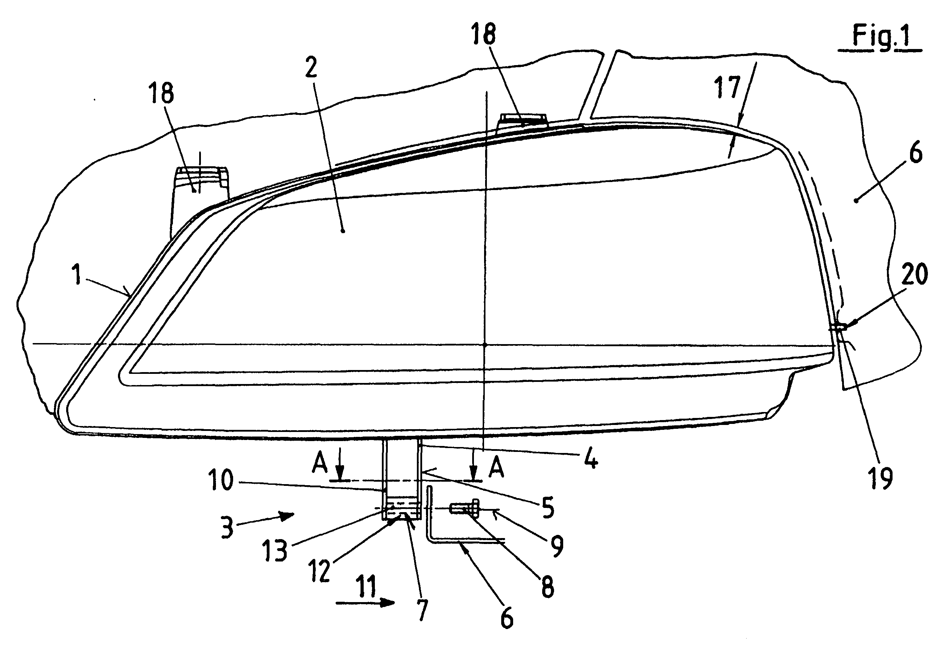

Der Scheinwerfer für Fahrzeuge nach Figur 1 weist ein aus Kunststoff bestehendes topfförmiges Gehäuseteil (1) auf, in welches mehrere nicht dargestellte Lichtsysteme eingesetzt sind. Das topfförmige Gehäuseteil ist auf seiner Vorderseite durch eine haubenartige lichtdurchlässige Abschlußscheibe (2) verschlossen. Zwischen der Abschlußscheibe (2) und einem an die Abschlußscheibe angrenzenden Rand einer Fahrzeugkarosserie (6) verläuft ein Spalt (17). An die obere Seite des Gehäuseteils (1) sind nahe der Abschlußscheibe (2) zwei elastisch nachgiebige Haltelaschen (18) angeformt, welche mit ihrem freien Endabschnitt gegen die Lichtaustrittsrichtung des Scheinwerfers weisen. Die freien Endabschnitte der Haltelaschen (18) sind vertikal elastisch nachgiebig ausgeführt und weisen ein Aufnahmeloch für einen Befestigungsbolzen auf (nicht dargestellt), durch welchen die Laschen an einer annähernd horizontal verlaufenden Anlagefläche der Fahrzeugkarosserie anlegbar sind. An eine seitliche Seitenwand des Gehäuseteils (1) ist nahe der Abschlußscheibe (2) ein starrer Halteansatz (19) angeformt, welcher in ein nutartiges Anschlagelement (20) der Fahrzeugkarosserie (6) eingreift. Zwischen den beiden Haltelaschen (18) ist an die untere Seite des Gehäuseteils (1) nahe der Abschlußscheibe (2) ein Halteelement (3) angebracht. Das Halteelement (3) weist eine erste und zweite zungenartige Lasche (4 und 10) auf, welche mit ihrer Wurzel an dem Gehäuseteil (1) angeformt sind und mit ihrer Spitze nach unten gerichtet sind. Die Laschen (4 und 10) verlaufen mit ihren breiten Seitenflächen in Lichtaustrittsrichtung und verjüngen sich mit ihren schmalen langen Seitenflächen (14) zu ihrem freien Ende hin. Die beiden Laschen (4 und 10) sind quer zu ihren breiten Seitenflächen elastisch nachgiebig ausgeführt und sind an ihren breiten Seitenflächen frei von Versteifungsrippen. Die Laschen (4 und 10) sind an ihren freien Endabschnitten durch ein zwischen ihnen verlaufendes Distanzstück (12) verbunden. Das Distanzstück (12) ist an die freien Endabschnitte der Laschen (4 und 10) angeformt. Das Halteelement (3) ist durch das Distanzstück (12) und die beiden Laschen (4 und 10) U-förmig gestaltet. Das Distanzstück (12) ist hülsenförmig ausgeführt und weist ein Aufnahmeloch (7) auf, welches ein Sackloch ist und durch die erste Lasche (4) hindurchgeht. Die äußere breite Seitenfläche in der ersten Lasche (4) ist am freien Endabschnitt der Lasche (4) die Anlagefläche (5), mit welcher das Halteelement (3) an die Fahrzeugkarosserie (6) anlegbar ist.

In das Aufnahmeloch (7) des Distanzstückes (7) des Halteelements (3) ist ein Befestigungsbolzen (8) mit seinem Gewindeschaft eindrehbar. Der Gewindeschaft des Befestigungsbolzens (8) drückt in die Innenseite des Aufnahmeloches (7) das Gewinde selbst ein. Somit ist das Distanzstück (12) ein Mutterteil für den Gewindeschaft des Befestigungsbolzens (8).Die Längsachse (9) des Befestigungsbolzens (8) verläuft horizontal und quer zur Lichtaustrittsrichtung des Scheinwerfers.

Bei der Montage des Scheinwerfers ist in einem ersten Arbeitsgang der Scheinwerfer mit seinem Halteansatz (19) in das nutartige Anschlagelement (20) einzusetzen. In einem zweiten Arbeitsgang ist das Halteelement (3) mit seiner dem Halteansatz (19) zugewandten Anlagefläche (5) mittels des Befestigungsbolzens (8) an der Fahrzeugkarosserie (6) festzusetzen. Beim Eindrehen des Gewindeschafts des Befestigungsbolzens (8) in das Aufnahmeloch (7) des Distanzstückes (12) zieht sich das Distanzstück (12) unter elastischer Verformung der Laschen (4 und 10) an die Fahrzeugkarosserie (6) heran, bis die erste Lasche (4) mit ihrer Anlagefläche (5) an der Fahrzeugkarosserie (6) fest anliegt. Dabei liegt der Befestigungsbolzen (8) mit einem Kopf an der dem Halteelement (3) abgewandten Seite der Fahrzeugkarosserie (6) an. Beim Eindrehen des Gewindeschafts des Befestigungsbolzens (8) in das Aufnahmeloch (7) des Distanzstückes (12) entsteht in Richtung der Längsachse (9) des Befestigungsbolzens (8) eine große Kraft, da der Gewindeschaft des Befestigungsbolzens (8) sein Innengewinde im Distanzstück (12) selbst formt. Durch die große Kraft würde sich beim Eindrehen des Befestigungsbolzens (8) in das Distanzstück (12) ein Halteelement (3) wegbiegen, welches nur eine einzige elastisch nachgiebige Lasche aufweist. Die beim Formen des Gewindes entstehenden Späne sammeln sich in einem Hohlraum (13), welcher zwischen dem Grund des Aufnahmeloches (7) und dem freien Ende des Befestigungsbolzens (8) besteht.

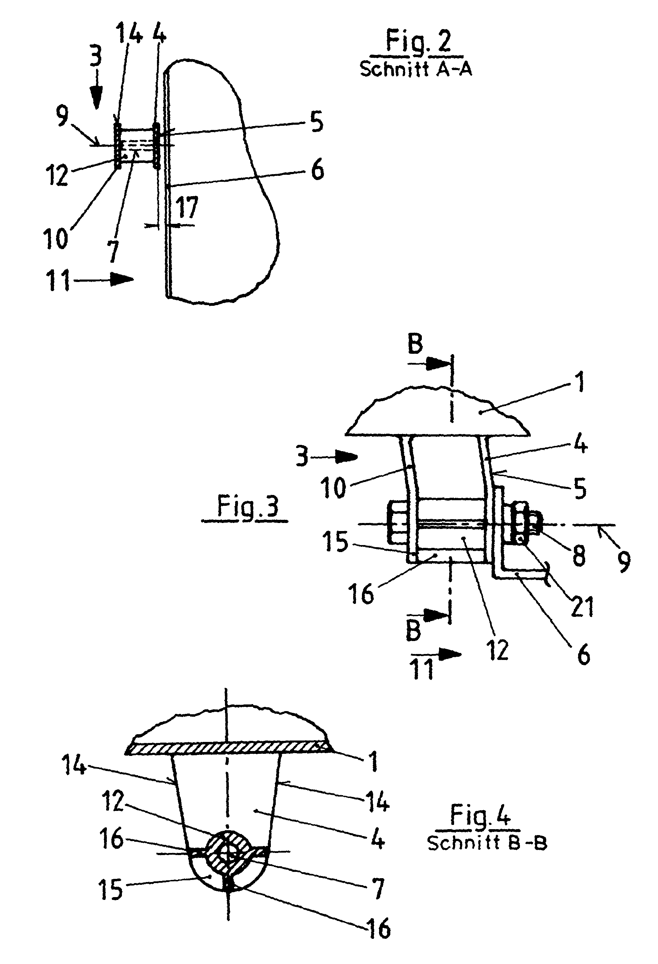

Bei dem in den Figuren 3 und 4 dargestellten Halteelement (3) ragen die beiden elastisch nachgiebigen Laschen (4 und 10) mit ihrem freien Rand (15) über das hülsenförmige Distanzstück (12) hinaus. Die freien Ränder sind über Versteifungsrippen (16) verbunden, welche an die Mantelfläche des Distanzstückes (12) angeformt sind und radial nach außen gerichtet sind. Das Aufnahmeloch (7) des Distanzstückes (12) geht durch beide Laschen (4 und 10) hindurch und der Befestigungsbolzen (8) ist mit seinem Gewindeschaft mit einer Mutter (21) der Fahrzeugkarosserie (6) verschraubt.

Nach einem Befestigen des Halteelements (3) an der Fahrzeugkarosserie (6) sind die zwischen dem Distanzstück (12) und dem Gehäuseteil (1) verlaufenden Abschnitte der Laschen (4 und 10) plastisch und / oder elastisch verformt. Durch die dabei entstehende Verspannungskraft in Richtung der Längsachse (9) des Befestigungsbolzens (8) liegt der Halteansatz (19) des Gehäuseteils (1) unter Vorspannung am Grund des nutartigen Anschlagelements (20) der Fahrzeugkarosserie (6) an. Dadurch ist mit einfachen Mitteln ein gleichbleibender Spalt (17) erreichbar, welcher zwischen der Abschlußscheibe (2) und der Fahrzeugkarosserie (6) besteht.

In einem nachfolgenden Arbeitsschritt sind die in vertikaler Richtung elastisch nachgiebigen Haltelaschen (18) an der Fahrzeugkarosserie (6) festzusetzen. Dabei bleibt die Lage des Scheinwerfers zur Fahrzeugkarosserie (6) hin unverändert.

### Bezugszeichenliste

Befestigungsvorrichtung einer Leuchte für Fahrzeuge, insbesondere eines Scheinwerfers für Fahrzeuge
- 1: Gehäuseteil
- 2: Abschlußscheibe
- 3: Halteelement
- 4: erste Lasche
- 5: Anlagefläche
- 6: Fahrzeugkarosserie
- 7: Aufnahmeloch
- 8: Befestigungsbolzen
- 9: Längsachse
- 10: zweite Lasche
- 11: Richtung
- 12: Distanzstück
- 13: Hohlraum
- 14: schmale Seitenfläche
- 15: freier Rand
- 16: Versteifungsrippen
- 17: Spalt
- 18: Haltelaschen
- 19: Halteansatz
- 20: Anschlagelement
- 21: Mutter

## Patentansprüche

1. Befestigungsvorrichtung einer Leuchte für Fahrzeuge, insbesondere eines Scheinwerfers für Fahrzeuge mit einem aus Kunststoff bestehenden Gehäuseteil (1) und mit mindestens einem an dem Gehäuseteil (1) angebrachten Halteelement (3), welches eine an den Gehäuseteil (1) angeformte Lasche (4) aufweist, deren eine breite Seitenfläche eine Anlagefläche (5) für die Fahrzeugkarosserie (6) ist und die quer zu ihrer Anlagefläche (5) nachgiebig ausgeführt ist, und welches ein Aufnahmeloch (7) für einen Befestigungsbolzen (8) aufweist, dessen Längsachse (9) quer zur Anlagefläche (5) verläuft und durch den das Halteelement (3) an der Fahrzeugkarosserie (6) festsetzbar ist, **dadurch gekennzeichnet, daß** das Halteelement (3) eine an dem Gehäuseteil (1) angeformte zweite Lasche (10) aufweist, welche in Richtung (11) der ersten Lasche (4) nachgiebig ausgeführt ist, wobei die beiden nachgiebigen Laschen (4 und 10) an ihren freien Endabschnitten durch ein Distanzstück (12) verbunden sind, welches das Aufnahmeloch (7) für den Befestigungsbolzen (8) aufweist.

2. Befestigungsvorrichtung nach Anspruch 1, **dadurch gekennzeichnet, daß** das Distanzstück (12) an die freien Endabschnitte der Laschen (4 und 10) angeformt ist.

3. Befestigungsvorrichtung nach Anspruch 1 oder 2, **dadurch gekennzeichnet, daß** das Distanzstück (12) ein Mutterteil für einen Gewindeschaft des Befestigungsbolzens (8) ist.

4. Befestigungsvorrichtung nach Anspruch 3, **dadurch gekennzeichnet, daß** der Innendurchmesser des Aufnahmeloches (7) des Distanzstückes (12) kleiner als der Außendurchmesser des Gewindeschafts des Befestigungsbolzens (8) ist, durch den ein Innengewinde des Aufnahmeloches (7) selber formbar ist.

5. Befestigungsvorrichtung nach Anspruch 3 oder 4, **dadurch gekennzeichnet, daß** das Aufnahmeloch (7) ein Sackloch ist und zwischen seiner Grundfläche und dem freien Ende des Gewindeschafts des Befestigungsbolzens (8) einen für Gewindespäne dienenden Hohlraum (13) aufweist.

6. Befestigungsvorrichtung nach einem der Ansprüche 1 bis 5, **dadurch gekennzeichnet, daß** die beiden Laschen (4 und 10) des Halteelements (3) zungenartig und elastisch nachgiebig ausgeführt sind.

7. Befestigungsvorrichtung nach einem der Ansprüche 1 bis 6, **dadurch gekennzeichnet, daß** die Laschen (4 und 10) sich mit ihren abgewandten schmalen Seitenflächen (14) zum Distanzstück (12) hin verjüngen.

8. Befestigungsvorrichtung nach einem der Ansprüche 2 bis 7, **dadurch gekennzeichnet, daß** die Laschen (4 und 10) mit ihrem freien Rand (15) das an die Laschen (4 und 10) angeformte Distanzstück (12) überragen und durch mindestens eine Lasche (4) das Aufnahmeloch (7) des Halteelements (3) hindurchführt.

9. Befestigungsvorrichtung nach Anspruch 8, **dadurch gekennzeichnet, daß** die freien Ränder (15) der Laschen (4 und 10) durch an die Mantelfläche des Distanzstückes (12) angeformte Versteifungsrippen (16) verbunden sind.

10. Befestigungsvorrichtung nach einem der Ansprüche 1 bis 9, **dadurch gekennzeichnet, daß** die Laschen (4 und 10) mit ihren breiten Seitenflächen in Lichtaustrittsrichtung der Leuchte verlaufen.

## Claims

1. Mounting device for a vehicle lamp, in particular a headlamp for vehicles, comprising a housing section (1) made of plastic material and at least one holding element (3) which is mounted on the housing section (1) and comprises an integrated strip (4) on the housing section (1) the one broad side surface of which is an abutment surface (5) for the vehicle body (6) and which is designed to be resilient across its abutment surface (5) and comprises an accommodation hole (7) for a mounting pin (8) the longitudinal axis (9) of which extends across the abutment surface (5) and is fixed to the vehicle body (6) by the holding element (3), **characterised in that** the holding element (3) comprises a second strip (10) integrated with the housing section (1) which is designed to be resilient in the direction (11) of the first strip (4), and the two resilient strips (4 and 10) are at their free end sections connected by a spacer (12) which includes the accommodation hole (7) for the mounting pin (8).

2. Mounting device according to Claim 1, **characterised in that** the spacer (12) is integrated with the free end sections of the strips (4, 10).

3. Mounting device according to Claim 1 or 2, **characterised in that** the spacer (12) is the nut section for a threaded rod of the mounting pin (8).

4. Mounting device according to Claim 3, **characterised in that** the inside diameter of the accommodation hole (7) of the spacer (12) is smaller than the outside diameter of the threaded shaft of the mounting pin (8) through which an inside thread of the accommodation hole (7) is itself shapeable.

5. Mounting device according to Claim 3 or 4, **characterised in that** the accommodation hole (7) is a pocket hole, comprising between its base surface and the free end of the threaded shaft of the mounting pin (8) a cavity (13) serving threading waste.

6. Mounting device according to one of Claims 1 to 5, **characterised in that** the two strips (4 and 10) of the holding element (3) are designed like tongues and elastically resilient.

7. Mounting device according to one of Claims 1 to 6, **characterised in that** the strips (4 and 10) narrow with their facing away narrow side surfaces (14) towards the spacer (12).

8. Mounting device according to one of Claims 2 to 7, **characterised in that** the strips (4 and 10) protrude with their free edge (15) over the spacer (12) which is integrated with the strips (4 and 10) and passes the accommodation hole (7) of the holding element (3) through at least one strip (4).

9. Mounting device according to Claim 8, **characterised in that** the free ends (15) of the strips (4 and 10) are connected via reinforcing webs (16) which are integrated with the casing surface of the spacer (12).

10. Mounting device according to one of Claims 1 to 9, **characterised in that** the strips (4 and 10) extend with their broad side surface in the light emitting direction of the lamp.

## Revendications

1. Dispositif de fixation d'un feu pour véhicules, en particulier d'un projecteur pour véhicules, comportant une partie de boîtier (1) en matière plastique et comportant au moins un élément de retenue (3) monté sur la partie de boîtier (1), lequel présente une patte (4) conformée sur la partie de boîtier (1), dont une surface latérale large est une surface d'appui (5) pour la carrosserie de véhicule (6) et qui est réalisée souple transversalement à sa surface d'appui (5), et lequel présente un trou de réception (7) pour un goujon de fixation (8), dont l'axe longitudinal (9) s'étend transversalement à la surface d'appui (5) et par lequel l'élément de retenue (3) peut être immobilisé sur la carrosserie de véhicule (6), **caractérisé en ce que** l'élément de retenue (3) présente une deuxième patte (10) conformée sur la partie de boîtier (1) qui est réalisée souple en direction (11) de la première patte (4), les deux pattes (4 et 10) souples étant reliées à leurs tronçons d'extrémité libre par un élément écarteur (12) qui présente le trou de réception (7) pour le goujon de fixation (8).

2. Dispositif de fixation selon la revendication 1, **caractérisé en ce que** l'élément écarteur (12) est conformé sur les tronçons d'extrémité libre des pattes (4 et 10).

3. Dispositif de fixation selon la revendication 1 ou 2, **caractérisé en ce que** l'élément écarteur (12) est une partie d'écrou pour une tige filetée du goujon de fixation (8).

4. Dispositif de fixation selon la revendication 3, **caractérisé en ce que** le diamètre intérieur du trou de réception (7) de l'élément écarteur (12) est plus petit que le diamètre extérieur de la tige filetée du goujon de fixation (8), au moyen duquel peut être formé un taraudage du trou de réception (7) lui-même.

5. Dispositif de fixation selon la revendication 3 ou 4, **caractérisé en ce que** le trou de réception (7) est un trou borgne et présente entre sa surface de base et l'extrémité libre de la tige filetée du goujon de fixation (8) une cavité (13) servant à des copeaux de taraudage.

6. Dispositif de fixation selon l'une des revendications 1 à 5, **caractérisé en ce que** les deux pattes (4 et 10) de l'élément de retenue (3) sont réalisées en forme de languettes et élastiquement souples.

7. Dispositif de fixation selon l'une des revendications 1 à 6, **caractérisé en ce que** les pattes (4 et 10) se rétrécissent vers l'élément écarteur (12) avec leur surfaces latérales (14) étroites détournées.

8. Dispositif de fixation selon l'une des revendications 2 à 7, **caractérisé en ce que** les pattes (4 et 10) surplombent avec leur bord libre (15) l'élément écarteur (12) conformé sur les pattes (4 et 10) et **en ce que** le trou de réception (7) de l'élément de retenue (3) passe à travers au moins une patte (4).

9. Dispositif de fixation selon la revendication 8, **caractérisé en ce que** les bords libres (15) des pattes (4 et 10) sont reliés par des nervures de renforcement (16) conformées sur la surface enveloppe de l'élément écarteur (12).

10. Dispositif de fixation selon l'une des revendications 1 à 9, **caractérisé en ce que** les pattes (4 et 10) s'étendent avec leurs surfaces latérales larges en direction de sortie de lumière du feu.
